(19) Europäisches Patentamt
European Patent Office
Office européen des brevets

(11) **EP 4 534 978 A1**

(12) **EUROPEAN PATENT APPLICATION**

(43) Date of publication:
**09.04.2025 Bulletin 2025/15**

(21) Application number: **23201530.5**

(22) Date of filing: **04.10.2023**

(51) International Patent Classification (IPC):
**G01N 21/17** (2006.01)   **G01N 29/24** (2006.01)
**G01N 21/37** (2006.01)

(52) Cooperative Patent Classification (CPC):
**G01N 21/1702; G01N 29/036; G01N 29/2425;**
G01N 21/37; G01N 2021/1704

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **ABB SCHWEIZ AG**
**5400 Baden (CH)**

(72) Inventors:
• **RIAUD, Antoine**
  **5415 Nussbaumen (CH)**
• **GREMAUD, Robin**
  **8048 Zürich (CH)**
• **LO, Hsiang-Yu**
  **4310 Rheinfelden (CH)**

(74) Representative: **Maiwald GmbH**
**Engineering**
**Elisenhof**
**Elisenstrasse 3**
**80335 München (DE)**

(54) **A PHOTOACOUSTIC GAS SENSING APPARATUS**

(57)    The invention relates to a of photoacoustic gas sensing apparatus (100) for sensing a gas sample in a sample chamber (310). The apparatus (100) comprises: a reference light source (220), configured for emitting a reference light beam (221) when driven by a reference power source (225), wherein the reference light beam (221) is configured for passing a reference chamber (320) filled with a reference gas and for reaching a detector chamber (400) filled with a detector gas; a sample light source (210), configured for emitting a sample light beam (211) when driven by a sample power source (215), wherein the sample light beam (211) is configured for passing the sample chamber (310) filled with the gas sample and for reaching the detector chamber (400);

a microphone (500), configured for sensing pressure changes in the detector chamber (400), the pressure changes being a function of the gas sample; and a control unit (600), configured for receiving an electric output (560), caused by the pressure changes, from the microphone (500), and for controlling, depending on the electric output (560), an amplitude of the reference power source (225) and/or of the sample power source (215).

Fig. 1

EP 4 534 978 A1

**Description**

Field of the invention

The invention relates to the field of photoacoustic gas sensing apparatuses, particularly to apparatuses that make use of a photothermal expansion of a gas sample. The invention further relates to a method and to a non-transitory computer-readable storage medium.

Background

Photoacoustic gas sensing apparatuses are known in the art. However, at least some types of photoacoustic gas sensing apparatuses use a so-called mechanical chopper for firstly making a light beam pass a first cell and, after that, making the light beam pass a second cell. The first cell may be a reference cell, and the second cell may be a cell for the sample gas or trace gas. The mechanical chopper may be a reason for rather short maintenance intervals of the gas sensing apparatus.

Description

It is an objective of the disclosure to provide an improved photoacoustic gas sensing apparatus, particularly without having a mechanical chopper. This objective is achieved by the subject-matter of the independent claims. Further embodiments are evident from the dependent claims and the following description.
One aspect relates to a photoacoustic gas sensing apparatus for sensing a gas sample in a sample chamber. The apparatus comprises:

  a reference light source, configured for emitting a reference light beam when driven by a reference power source, wherein the reference light beam is configured for passing a reference chamber filled with a reference gas and for reaching a detector chamber filled with a detector gas;
  a sample light source, configured for emitting a sample light beam when driven by a sample power source, wherein the sample light beam is configured for passing the sample chamber filled with the gas sample and for reaching the detector chamber;
  a microphone, configured for sensing pressure changes in the detector chamber, the pressure changes being a function of the gas sample; and
  a control unit, configured for receiving an electric output, caused by the pressure changes, from the microphone, and for controlling, depending on the electric output, an amplitude of the reference power source and/or of the sample power source.

A photoacoustic gas sensing apparatus is sometimes also called URAS (ultra-red absorption writer). The photoacoustic gas sensing apparatus uses the effect that a thermal expansion of a gas can be caused by a light beam. This effect may depend on both the gas and the wavelength of the light beam. Particularly, the thermal expansion of a specific gas may be highest at a wavelength where the gas has its highest absorption. The photoacoustic signal strength may be proportional to a thermal expansion of the gas, that is:

$$p = \frac{A\left(\dot{Q}_{N_2} - \dot{Q}_s\right)}{f} R(f),$$

where

  A is some constant,
  Q is a heating power of the light after it travelled through some gas cell, and

$R(f) = 2Re\left(\frac{1}{1+re^{ikL}}\right) = \frac{2}{\sqrt{(1+r cos(k_0 L)e^{-\alpha L})^2 + (r sin(k_0 L e^{-\alpha L}))}}$ is a resonance gain of the cell, with

$k = k_0 - i\alpha$ the complex wavenumber of the acoustic wave, with $k_0 = 2\pi f/c_0$.

The reflection coefficient $r \sim \frac{z_s - z_g}{z_g + z_s} \sim 1 - 10^{-6}$ for an acoustic wave in a gas reflecting on a solid wall (where Z is the acoustic impedance, approx. 300 Ray for a gas and 3 MRay for a solid).

The attenuation coefficient for air is $\alpha \sim 1.84 \times 10^{-11}/f^2\ m^{-1}$.

The gain factor $G(f) = R(f)/f$ for the URAS may be significantly higher at a resonant frequency of the gas, for instance more than 5 times higher or, e.g., about 8.5 times higher than for "surrounding" frequencies. The absorbed power depends on the wavelength of the light. The acoustic pressure depends on the absorbed power and on the acoustic frequency, because an acoustic resonance can occur for some frequencies. In this implementation, the acoustic frequency is the blinking frequency of the LED. The acoustic resonance depends on the sound velocity in the gas, so it will change with the composition and the temperature of the gas in the detector cell. A value of 2833 Hz was obtained for air.

The URAS comprises a reference light source. The reference light source emits a reference light beam when driven by a reference power source. The reference power source may deliver an alternating current of any waveform, e.g. a sine, a rectangle, a saw tooth or of another waveform. The reference power source may be driven by a controller, so that frequency, waveform and/or amplitude of the reference light beam may be varied. The URAS also comprises a sample light source. The sample light source emits a reference light beam when driven by a sample power source. The sample light source may be of the same type or of a (very) similar type as the reference light source. The sample power source may be driven by the same controller as the reference power source. The two power sources, thus, may have the same frequency, but they may differ in amplitude and/or in phase. This, of course, also applies to the two light sources.

The reference light beam is configured for passing a reference chamber filled with a reference gas and for reaching a detector chamber filled with a detector gas. The sample light beam is configured for passing the sample chamber, essentially in parallel to the reference light beam that is passing the reference chamber, and also for reaching the detector chamber. The sample chamber is filled with the gas sample. The detector chamber may be filled with any kind of gas or, in some embodiments, with a kind of gas that supports the measurement, i.e. the sensing of the gas sample. In other words, the URAS has at least three gas cells or chambers; one contains the sample gas, another one is the reference cell, which contains the reference gas, and a third one is a plurality of detector cells that contain detection gases. The light emitted by the reference light source and the sample light source travels through the respective one of the gas cells. The detector cell collects the light leaving the gas cell. This light is absorbed by the gas in the detector cell, which triggers a photothermal expansion, and results in a pressure change in the detector cell. A pressure change in a gas is nothing but a sound wave and can, thus, be sensed or captured by a microphone. Accordingly, the microphone is configured for sensing pressure changes in the detector chamber, and the pressure changes are a function of the gas sample, particularly a function of an absorption behaviour of the gas sample. The pressure changes may also depend on the reference light beam and/or the sample light beam, e.g. its blinking frequency and light intensity. The microphone may be part of a wall - e.g. to an outer wall - of the detector chamber and/or may be attached to a separator (or an inner wall) of the detector chamber. The microphone converts the pressure changes to an electric signal.

The URAS further comprises a control unit. The control unit is configured for receiving an electric output from the microphone; the electric output is caused by the pressure changes in the detector chamber. The control unit is further configured for controlling, depending on the electric output, an amplitude of the reference power source and/or of the sample power source. The control unit may further be configured for controlling frequency, phase and/or further attributes of said power sources and, thus, of the light sources that are connected to the respective power sources. The control unit may, for instance, be able to control the amplitude of the reference power source and/or of the sample power source in a way that the sensed pressure changes in the detector chamber reach a minimum, e.g. a value close to zero.

This photoacoustic gas sensing apparatus advantageously does not have or need a mechanical chopper. This brings several benefits, for instance less ambient vibrations and/or fewer moving parts. (Some embodiments may not have mechanical parts at all.) This may contribute to significantly longer maintenance intervals of the gas sensing apparatus. Furthermore, this type of gas sensing apparatus may have a longer lifetime than other types. Additionally, this apparatus has a lower vibration noise level than mechanical ones. Besides, this apparatus is able to tolerate manufacturing tolerances of the light source, even manufacturing deviations between the reference light source and the sample light source. Enhancements in infrared LEDs means, e.g. providing LEDs with higher intensities, may lead to a larger signal.

In various embodiments, the reference light source and/or the sample light source is configured for emitting mid-infrared light, particularly of a wavelength between 2 μm and 15 μm, between 2 μm and 8 μm, between 2.5 μm and 7.5 μm, between 2.8 μm and 4.7 μm. The wavelength of the light sources may depend on the gases to be sensed.

Note that photoacoustic sensing is not restricted to infrared. In some embodiments, the reference light source and/or the sample light source is configured for emitting ultraviolet light, particularly of a wavelength between 200 nm and 400 nm. This may advantageously enable to sense different gas samples and/or a broad variety of gas samples.

In various embodiments, the reference light source and/or the sample light source is configured for emitting light of a frequency between 1 kHz and 100 kHz, particularly between 5 kHz and 50 kHz. The power sources - and, thus, the light sources - may deliver an alternating current or a periodic change of any waveform, e.g. a sine, a rectangle, a saw tooth or another waveform. The frequency may depend on the dimensions of the chambers and/or on the gas to be sensed. For instance if the largest dimension of the detector cell is L, then the useful frequency band of the light source is between $0.5 \cdot L/c$ and $2 \cdot L/c$, where c is the sound speed in the detector cell.

In various embodiments, the reference light source and/or the sample light source is a light-emitting diode, LED.

For instance, an LED L15895-0430ML by Hamamatsu may be used, which emits 1.4 mW at 4.3 $\mu$m. 33% of its light is absorbed by $CO_2$. In contrast, only 6% of a light bulb's power is absorbed by $CO_2$. But, LEDs not only have an higher efficiency, but can also emit higher frequencies than light bulbs. Furthermore, LEDs have a longer lifetime. i.e. while a lifespan infrared-emitting lightbulbs may range between 2,000 and 10,000 hours (for example, Edmund optics #87-299 and Thorlabs SLS20x series), a typical LED lasts for 100,000 hours, which might result in running the instrument for about 10 years without maintenance.

In some embodiments, the reference light source and/or the sample light source is of a adjustable wavelength and/or comprises a plurality of light sources. Particularly, each light source of the plurality of light sources may have a different wavelength. This may further increase the sensitivity of the apparatus, because the light source and/or the wavelength that is used for the sensing may be selected depending on the gas to be sensed.

In various embodiments, the reference gas is nitrogen or a calibrated blend matching the gas to be sensed in the sample cell. For instance, the gas to be sensed and/or analysed could be natural gas, which is supposed to have a constant composition. The reference cell could contain this expected mixture, and therefore the URAS would compare the reference and sample cell and spot any mismatch between them.

In various embodiments, the detector gas is a gas or a gas mixture having an absorption band that overlaps with the gas to be sensed. Examples may comprise $CO_2$ or $SO_2$, when $CO_2$ or $SO_2$, respectively, is to be sensed. Particularly, the detector gas may need to absorb at the same wavelength as the gas to be sensed. In other words, it may be advantageous when the detector gas has a similar molecular structure locally. However, the detector gas does not need to be of the same species as the gas to be sensed.

In various embodiments, the sample chamber and/or the reference chamber has a length between 5 cm and 15 cm, particularly about 10 cm, and/or has a diameter between 12.5 mm and 50 mm, particularly about 25 mm. This may be advantageous both for a handling of the apparatus, but also for the selection of the frequency used for the analysis.

In various embodiments, the sample chamber comprises an inlet opening with a filter arranged therein. This may advantageously contribute to reducing of avoiding particles of dust or dirt in the sample chamber.

In various embodiments, the microphone is a capacitive or condenser microphone, an electrodynamic microphone, a piezoelectric microphone and/or a flowmeter. It may be taken into consideration that capacitive microphones may be limited at low frequency by a pink (1/f) noise that arises from the white noise of high-value charge-holding resistors filtered by the capacitance of the microphone. Piezoelectric microphones (sometimes called "MEMS microphones") may have benefits, e.g. concerning their robustness. A flowmeter enables to measure the acoustic wave by opening a small channel between the two chambers, and measuring the flow driven by the difference of oscillating pressures in both chambers.

An aspect relates to a method for sensing a gas sample in a sample chamber by means of a photoacoustic gas sensing apparatus according to any one of the preceding claims, the method comprising the steps of:
Emitting a reference light beam, from a reference light source, which is driven by a reference power source, through a reference chamber filled with a reference gas to a detector chamber filled with a detector gas.

Emitting a sample light beam, from a sample light source, which is driven by a sample power source, through a sample chamber filled with a sample gas to the detector chamber, the sample light beam having a sample amplitude that is proportional to a reference amplitude of the reference light beam. The sample and reference light beams may have the same frequency, but there may be a phase shift between the sample light beam and the reference light beam. Furthermore, the proportionality coefficient between the sample and the reference light beam may be adjusted depending on the readout of the microphone in the detection chamber. If the reference light beam's intensity is Ir = f(t), then the sample light beam intensity is is = Kf(t+phi), where K is a proportionality constant that might be adjusted depending on the microphone output, and phi is the adjustable phase.

Sensing, by a microphone, pressure changes in the detector chamber, the pressure changes being a function of the gas sample. The pressure changes may be caused by an energy provided by the reference light beam and the sample light beam.

Receiving, by a control unit, an electric output, caused by the pressure changes, from the microphone.

Controlling, by the control unit, an amplitude of the reference power source and/or of the sample power source, so that the sensed pressure changes in the detector chamber, caused by a destructive interference of the pressure changes, which are caused by the reference power source and by the sample power source, are at a minimum. The minimum may, e.g., be a value close to zero. Thus, the control unit changes the sample amplitude and/or the reference amplitude in a way that the electric output of the microphone is at a minimum, caused by a destructive interference of the pressure waves. This may further contribute to an increased robustness against manufacturing deviations of the light sources.

In various embodiments, the method further comprises the step of: Before sensing pressure changes in the detector chamber, exchanging the sample gas in the sample chamber. This step may be conducted right before the sensing step and/or right before the emitting steps.

An aspect relates to a use of a photoacoustic gas sensing apparatus as described above and/or below for sensing and/or for analysing a gas sample.

An aspect relates to a non-transitory computer-readable storage medium comprising computer program instructions stored therein, which, when executed on control unit of a photoacoustic gas sensing apparatus and/or on another processor, instructs the apparatus to perform the method described above and/or below.

It should be noted that two or more embodiments described above and/or below can be combined, as far as technically feasible.

For further elucidation, the disclosure is described by means of embodiments shown in the figures. These embodiments are to be considered as examples only, but not as limiting.

Brief Description of the Drawings

The drawings depict:

Fig. 1          schematically a photoacoustic gas sensing apparatus according to an embodiment;
Figs. 2a and 2b     schematically absorption spectra according to an embodiment;
Fig. 3          schematically a photoacoustic gas sensing apparatus according to an embodiment;
Fig. 4          a flow diagram according to an embodiment.

Detailed Description of Embodiments

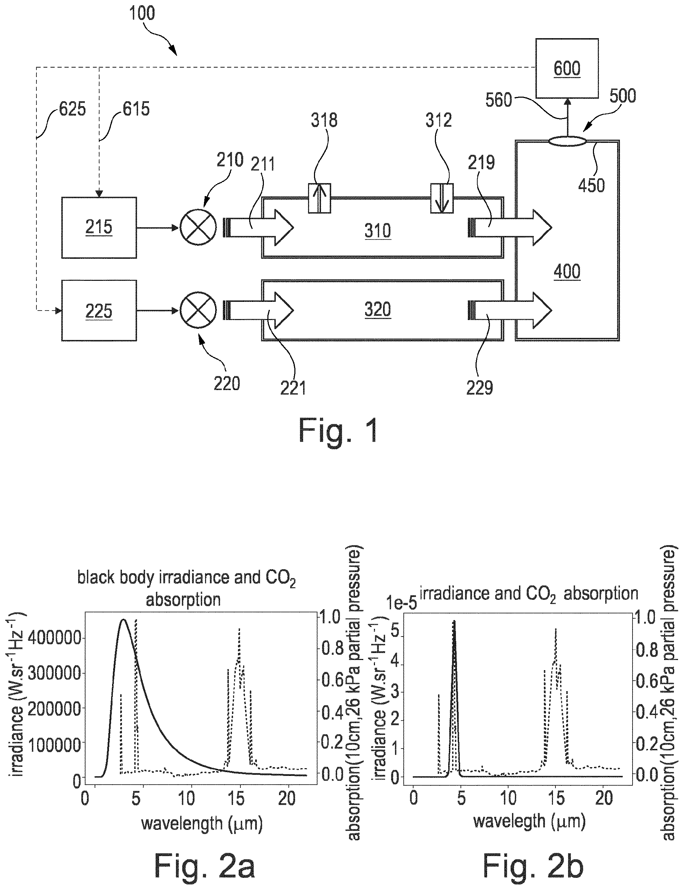

Fig. 1 shows schematically a photoacoustic gas sensing apparatus 100 according to an embodiment. The gas sensing apparatus 100 is configured for sensing a gas sample in a sample chamber 310. The apparatus 100 comprises a reference light source 220, which is driven by a reference power source 225. The reference light source 220 emits a reference light beam 221, which passes through a reference chamber 320 filled with a reference gas and finally reaches a detector chamber 400 filled with a detector gas. The apparatus 100 further comprises a sample light source 210, which is driven by a sample power source 215. The sample light source 210 emits a sample light beam 211, which passes through the sample chamber 310 filled with the gas sample and finally reaches the detector chamber 400 filled with a detector gas. The sample chamber 310 has an inlet opening 312, optionally with a filter arranged therein, and an outlet opening 318, so that the gas sample can be exchanged.

At an outer wall 450 (e.g. in an opening, as shown), at an inner wall and/or on another position of the detector chamber 400, a microphone 500 is arranged, so that pressure changes in the detector chamber 400 can be sensed. The pressure changes may be a function of the gas sample, particularly a function of an absorption behaviour of the gas sample. The microphone 500 sends its electric output, via a line 560, to a control unit 600. The control unit 600 receives the electric output and controls, depending on the electric output 560, an amplitude of the reference power source 225 and/or of the sample power source 215 via lines 625 and 615, respectively. As a result, the sensed pressure changes in the detector chamber are controlled to reach a minimum, caused by a destructive interference of the pressure changes caused by the light sources. The minimum may, e.g., be a value close to zero.

Figs. 2a and 2b show schematically absorption spectra according to an embodiment. Figs. 2a shows $CO_2$ absorption lines (dotted lines) and an irradiance (solid line) of a black body of 975 K. It is clearly visible that $CO_2$ absorption lines at about 3 and 4.5 $\mu$m are stimulated in a higher degree. Figs. 2b shows $CO_2$ absorption lines (dotted lines) and an irradiance (solid line) of an exemplary LED emitting mid-infrared light. In difference to the black body radiator of Figs. 2a, this LED light has a narrower band and fits better to one characteristic line of the $CO_2$ absorption spectrum. Hence, the precision of recognizing a specific sort of gas is significantly increased by using this light source. This narrow band characteristic of the LED light further provides a chance of a precise adaptation of a light source to the target gas that should be measured. For another type of gas, the light source can be adapted to a specific gas sample - or even a plurality of gases - to be sensed. This adaptation may be achieved, for instance, by using a light source of an adjustable wavelength and/or by using a plurality of light sources, each with different wavelength, from which the light source with the best-fitting wavelength can be selected.

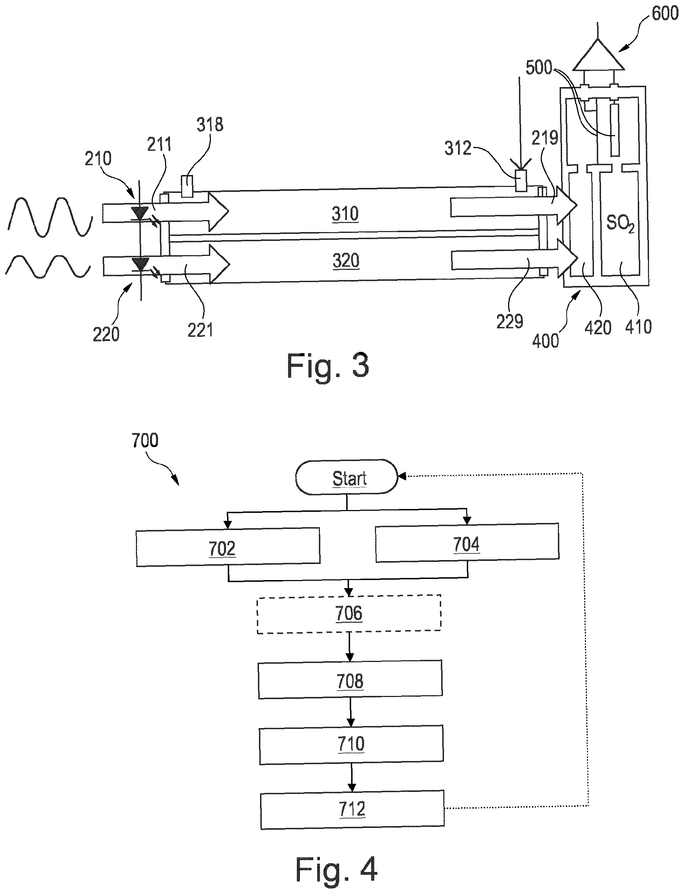

Fig. 3 shows schematically a photoacoustic gas sensing apparatus 100 according to an embodiment. This apparatus is quite similar to the apparatus 100 of Fig. 1. Same reference signs designate same or similar elements. The main difference to Fig. 1 is the design of the detector chamber 400. In this embodiment, the chamber is divided in a detector and a discrimination chamber, each of which contains a different gas mixture. Using such a combination, it is possible to reduce cross-interference between gases, which is to discriminate between gases that would both have an absorption ray overlap with the detecting gas. For instance, $CO_2$ has two absorption rays, one near 4.7 um and the other near 15 um. If $CO_2$ is used as the detection gas, it can detect species absorbing at any of those two wavelengths. Hence, it cannot discriminate between a species A that would absorb at 4.7 um, and another species B that would absorb at 15 um. To discriminate between A and B, one can compare the absorption of $CO_2$ to the absorption of say CO that absorbs at 4.5 and 4.7 um. If both gases absorb the radiation, then the sample gas has an absorption ray at 4.7 um, but if only $CO_2$ absorbs the radiation, then the sample gas absorbs at 15 um. By carefully adjusting the concentration, the absorption of the discrimination and detection chambers may be matched in order to notch some ambiguous wavelength that both species A and B absorb.

**Fig. 4** shows a flow diagram 700 for sensing a gas sample in a sample chamber 310 (see **Fig. 1** or **Fig. 3** for examples) by means of a photoacoustic gas sensing apparatus 100 according to an embodiment. After starting the method, in a step **702,** a reference light beam 221 is emitted from a reference light source 220. In a step **704,** a sample light beam 211 is emitted from a sample light source 210. The steps **702** and **704** may be conducted essentially parallel. The emitted reference light beam 221 passes from the reference light source 220 through a reference chamber 320 filled with a reference gas to a detector chamber 400 filled with a detector gas. The emitted sample light beam 211 passes from the sample light source 210 through a sample chamber 310 filled with a sample gas to the detector chamber 400.

In a step **706,** the sample gas in the sample chamber 310 is exchanged. This step is conducted before a step **708** (see below). In some embodiments, the step **706** may be conducted before the steps **702** and **704.** In a step **708,** pressure changes in the detector chamber 400 are sensed by a microphone 500, wherein the pressure changes are a function of the gas sample. In a step **710,** an electric output is received by a control unit 600. The electric output is caused by the pressure changes and come from the microphone 500 via a line 560. In a step **712,** the control unit 600 controls an amplitude of the reference power source 225 and/or of the sample power source 215, so that the sensed pressure changes in the detector chamber 400 are at a minimum. This effect may be caused by a destructive interference of the pressure changes, which are caused by the reference power source 225 and by the sample power source 215.

List of Reference Symbols

| | |
|---|---|
| 100 | photoacoustic gas sensing apparatus |
| 210 | sample light source |
| 211 | sample light beam |
| 215 | sample power source |
| 220 | reference light source |
| 221 | reference light beam |
| 225 | reference power source |
| 310 | sample chamber |
| 312 | inlet opening of the sample chamber |
| 318 | outlet opening of the sample chamber |
| 320 | reference chamber |
| 400 | detector chamber |
| 420 | discrimination chamber |
| 450 | wall of the detector chamber |
| 500 | microphone |
| 560 | line |
| 600 | control unit |
| 615, 625 | control lines |
| 700 | flow diagram |
| 702-712 | steps |

**Claims**

1. A photoacoustic gas sensing apparatus (100) for sensing a gas sample in a sample chamber (310), the apparatus (100) comprising:

   a reference light source (220), configured for emitting a reference light beam (221) when driven by a reference power source (225),
   wherein the reference light beam (221) is configured for passing a reference chamber (320) filled with a reference gas and for reaching a detector chamber (400) filled with a detector gas;
   a sample light source (210), configured for emitting a sample light beam (211) when driven by a sample power source (215),
   wherein the sample light beam (211) is configured for passing the sample chamber (310) filled with the gas sample and for reaching the detector chamber (400);
   a microphone (500), configured for sensing pressure changes in the detector chamber (400), the pressure changes being a function of the gas sample; and

a control unit (600), configured for receiving an electric output (560), caused by the pressure changes, from the microphone (500), and

for controlling, depending on the electric output (560), an amplitude of the reference power source (225) and/or of the sample power source (215).

2. The apparatus (100) of claim 1,
   wherein the reference light source (220) and/or the sample light source (210) is configured for emitting mid-infrared light, particularly of a wavelength between 2 μm and 15 μm, between 2 μm and 8 μm, between 2.5 μm and 7.5 μm, between 2.8 μm and 4.7 μm, and/or

3. The apparatus (100) of claim 1,
   wherein the reference light source (220) and/or the sample light source (210) is configured for emitting ultraviolet light, particularly of a wavelength between 200 nm and 400 nm.

4. The apparatus (100) of any one of the preceding claims,
   wherein the reference light source (220) and/or the sample light source (210) is configured for emitting light of a frequency between 1 kHz and 100 kHz, particularly between 5 kHz and 50 kHz.

5. The apparatus (100) of any one of the preceding claims,
   wherein the reference light source (220) and/or the sample light source (210) is a light-emitting diode, LED.

6. The apparatus (100) of any one of the preceding claims,
   wherein the reference light source (220) and/or the sample light source (210) is of an adjustable wavelength and/or comprises a plurality of light sources.

7. The apparatus (100) of any one of the preceding claims,
   wherein the reference gas is nitrogen or a calibrated blend matching the gas to be sensed in the sample cell.

8. The apparatus (100) of any one of the preceding claims,
   wherein the detector gas is a gas or a gas mixture having an absorption band that overlaps with the gas to be sensed.

9. The apparatus (100) of any one of the preceding claims,

   wherein the sample chamber (310) and/or the reference chamber (320) has a length between 5 cm and 15 cm, particularly about 10 cm, and/or
   has a diameter between 12.5 mm and 50 mm, particularly about 25 mm.

10. The apparatus (100) of any one of the preceding claims,
    wherein the sample chamber (310) comprises an inlet opening (312) with a filter arranged therein.

11. The apparatus (100) of any one of the preceding claims,
    wherein the microphone (500) is a capacitive microphone, an electrodynamic microphone, a piezoelectric microphone, and/or a flowmeter.

12. A method for sensing a gas sample in a sample chamber (310) by means of a photoacoustic gas sensing apparatus (100) according to any one of the preceding claims, the method comprising the steps of:

    emitting a reference light beam (221), from a reference light source (220), which is driven by a reference power source (225), through a reference chamber (320) filled with a reference gas to a detector chamber (400) filled with a detector gas;
    emitting a sample light beam (211), from a sample light source (210), which is driven by a sample power source (215), through a sample chamber (310) filled with a sample gas to the detector chamber (400), the sample light beam (211) having a sample amplitude that is proportional to a reference amplitude of the reference light beam (221);
    sensing, by a microphone (500), pressure changes in the detector chamber (400), the pressure changes being a function of the gas sample;
    receiving, by a control unit (600), an electric output (560), caused by the pressure changes, from the microphone (500); and

controlling, by the control unit (600), an amplitude of the reference power source (225) and/or of the sample power source (215), so that the sensed pressure changes in the detector chamber (400), caused by a destructive interference of the pressure changes, which are caused by the reference power source (225) and by the sample power source (215), are at a minimum.

13. The method of claim 12, further comprising the step of:
before sensing pressure changes in the detector chamber (400), exchanging the sample gas in the sample chamber (310).

14. Use of a photoacoustic gas sensing apparatus (100) according to any one of the claims 2 - 11 for sensing and/or for analysing a gas sample.

15. A non-transitory computer-readable storage medium comprising computer program instructions stored therein, which, when executed on control unit (600) of a photoacoustic gas sensing apparatus (100) and/or on another processor, instructs the apparatus (100) to perform the method according to claim 12 or 13.

Fig. 1

Fig. 2a

Fig. 2b

Fig. 3

Fig. 4

Europäisches
Patentamt

European
Patent Office

Office européen
des brevets

# EUROPEAN SEARCH REPORT

**Application Number**

EP 23 20 1530

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 3 897 153 A (KEENAN CHARLES A ET AL) 29 July 1975 (1975-07-29) | 1-4,7-9, 11-15 | INV. G01N21/17 |
| Y | * the whole document * | 5,6,10 | G01N29/24 |
| A | WO 2005/093390 A1 (NOVELTECH SOLUTIONS OY [FI]; KAUPPINEN JYRKI [FI]) 6 October 2005 (2005-10-06) * page 4, last paragraph to page 13, last paragraph; figures 12, 13 * | 1-15 | ADD. G01N21/37 |
| A | JP 2006 329913 A (YOKOGAWA ELECTRIC CORP) 7 December 2006 (2006-12-07) * paragraph [0014] - paragraph [0036]; figures 1,2 * | 1-15 | |
| A | EP 0 053 677 A1 (SIEMENS AG [DE]) 16 June 1982 (1982-06-16) * the whole document * | 1-15 | |
| Y | US 2018/284012 A1 (MARTA TERRY [US] ET AL) 4 October 2018 (2018-10-04) * paragraph [0028] - paragraph [0051]; figure 1 * | 5,6,10 | TECHNICAL FIELDS SEARCHED (IPC) G01N |
| A | US 3 995 960 A (FLETCHER JAMES C ADMINISTRATOR ET AL) 7 December 1976 (1976-12-07) * column 2, line 15 - line 25; figure 1 * | 1-15 | |
| Y | US 6 006 585 A (FORSTER MARTIN [CH]) 28 December 1999 (1999-12-28) * column 2, line 53 - column 3, line 21; figure 1 * | 10 | |

The present search report has been drawn up for all claims

| Place of search | Date of completion of the search | Examiner |
|---|---|---|
| Munich | 18 March 2024 | Flentje, Farida |

EPO FORM 1503 03.82 (P04C01)

## ANNEX TO THE EUROPEAN SEARCH REPORT
## ON EUROPEAN PATENT APPLICATION NO.

EP 23 20 1530

This annex lists the patent family members relating to the patent documents cited in the above-mentioned European search report.
The members are as contained in the European Patent Office EDP file on
The European Patent Office is in no way liable for these particulars which are merely given for the purpose of information.

18-03-2024

| Patent document cited in search report | | Publication date | Patent family member(s) | | Publication date |
|---|---|---|---|---|---|
| US 3897153 | A | 29-07-1975 | NONE | | |
| WO 2005093390 | A1 | 06-10-2005 | CN | 1950693 A | 18-04-2007 |
| | | | EP | 1730496 A1 | 13-12-2006 |
| | | | US | 2007151325 A1 | 05-07-2007 |
| | | | WO | 2005093390 A1 | 06-10-2005 |
| JP 2006329913 | A | 07-12-2006 | NONE | | |
| EP 0053677 | A1 | 16-06-1982 | DE | 3046234 A1 | 15-07-1982 |
| | | | EP | 0053677 A1 | 16-06-1982 |
| US 2018284012 | A1 | 04-10-2018 | CN | 108351293 A | 31-07-2018 |
| | | | CN | 108351294 A | 31-07-2018 |
| | | | EP | 3347697 A1 | 18-07-2018 |
| | | | EP | 3347698 A1 | 18-07-2018 |
| | | | US | 2018284012 A1 | 04-10-2018 |
| | | | US | 2018299369 A1 | 18-10-2018 |
| | | | WO | 2017044435 A1 | 16-03-2017 |
| | | | WO | 2017044436 A1 | 16-03-2017 |
| US 3995960 | A | 07-12-1976 | NONE | | |
| US 6006585 | A | 28-12-1999 | EP | 0855592 A1 | 29-07-1998 |
| | | | ES | 2268716 T3 | 16-03-2007 |
| | | | PT | 855592 E | 30-11-2006 |
| | | | US | 6006585 A | 28-12-1999 |

EPO FORM P0459

For more details about this annex : see Official Journal of the European Patent Office, No. 12/82